# EUROPEAN PATENT APPLICATION

(11) **EP 2 105 073 A1**
(43) Date of publication of application: **30.09.2009**
(21) Application number: 08075224.9
(22) Date of filing: 28.03.2008
(51) Int. Cl.: A47J 31/06, A47J 31/46

(54) **Method and apparatus for preparing beverages**

(71) Applicant: VEROMATIC INTERNATIONAL B.V., 3316 GZ Dordrecht (NL)
(72) Inventor: Verhoef, Kees, 3363 CA Sliedrecht (NL)
(74) Representative: Brookhuis, Hendrik Jan Arnold

(57) **Abstract**

The invention relates to a method of preparing a beverage having a cream top layer, in particular a beverage such as coffee or chocolate milk, and to a product for preparing such a beverage. Managing the size of the bubbles during the preparation of a beverage is a complicated process. In a method according to the invention a conduit (6) is provided, which conduit extends in an axial direction between an inlet (8) and an outlet (9) in a flow direction (10), and defines a passage having a flow through area. A first part of an intermediate beverage product is transported via the conduit (6) and through the first flow though area in the flow direction (10). Then, the passage in the conduit (6) is reduced to a second flow through area which is smaller than the first flow through area, and the second part of the intermediate beverage product is transported via the second flow through area, thus creating a beverage having a cream top layer.

## Description

### FIELD OF THE INVENTION

The invention relates to a method for preparing a beverage having a cream top layer, in particular a beverage such as coffee, cappuccino or chocolate milk, and to an apparatus for preparing such a beverage. Methods and apparatuses for preparing beverages such as coffee or chocolate milk are generally known from the art.

### BACKGROUND OF THE INVENTION

The preparation of a beverage is a complicated process in which starting elements, such as water, granulate, extract, etc, are mixed, into an (liquid) intermediate beverage product which is processed and transported via conduits. During the preparation of a beverage, bubbles of varying size emerge in the intermediate beverage product. For example, during the extracting and/or mixing of starting elements such as particles in the form of coffee granulate and a fluid in the form of hot water, bubbles are formed. These bubbles vary in size and form a foam layer on the surface of the beverage.

A foam layer comprising bubbles of varying sizes is unwanted since it has a negative influence on the texture and therefore the organoleptic sensation of the beverage. Furthermore, the presence of a layer of especially large bubbles is unwanted since most consumers do not appreciate it.

Consumers however do appreciate a cream layer that is formed by foam consisting of small bubbles having a substantially common diameter. However, managing the size of the bubbles during the preparation of the beverage is a complicated process. Furthermore, known apparatuses for preparing beverages with cream layers are complicated and use high pressure to obtain a cream layer.

### SUMMARY OF THE INVENTION

It is an object of the present invention to provide a method for preparing beverages having a cream top layer, in which the above mentioned drawbacks are eliminated altogether or occur to a greatly reduced extent. Another object of the invention is to provide a simple apparatus for producing a cream layer having small bubbles with a substantial uniform diameter.

This object is achieved by providing according to the present invention a method according to claim 1 and an apparatus according to claim 5.

When preparing a beverage with a method according to the invention, the first part of the intermediate beverage product is transported via the conduit and through the first flow though area. Then the passage in the conduit is reduced to a second flow through area, which is smaller than the first flow through area. The second part of the intermediate beverage product, comprising the bubbles, is transported through this second flow through area.

The reduced flow through area prevents bubbles having a large diameter from passing through the passage. These large diameter bubbles are broken down into bubbles having a smaller size which allows them to pass through the second flow through area.

The first and second part of the intermediate beverage product are subsequently combined into the final beverage for consumption.

Thus, by preparing a beverage according to the invention, large bubbles are removed from the intermediate beverage product, and only small bubbles, of substantially the same diameter remain for forming a cream layer on the final beverage.

An apparatus according to the invention comprises a conduit defining a passage allowing the intermediate beverage product to pass and means for reducing the passage in the conduit from a first flow through area to a second flow through area, which second flow through area is smaller than the first flow through area.

When preparing a beverage, a first part of an intermediate beverage product passing through the conduit will flow via the first flow through area. While the first part of the intermediate beverage product flows through the passage, the flow through area is reduced to form the second flow through area. The second part of the intermediate beverage product is then passed through the second, reduced flow through area.

The first flow through area is especially suited for transporting relatively large volumes through the conduit, thus enabling short preparation times.

The reduced, second flow through area is relatively small compared to the first flow through area. The second flow through area is thus especially suited for preventing large bubbles to pass through the conduit and dividing large bubbles in an intermediate beverage product into smaller bubbles. A fluid with small bubbles of substantially equal dimension, forming a layer of cream on the surface of the fluid, remains.

Thus, an apparatus for preparing a beverage according to the invention is able to produce a beverage comprising a cream layer of small bubbles of substantially the same diameter. Furthermore, the size of the bubbles is managed in a simple manner and does not require a complicated operating system or processing of the intermediate beverage product under high pressure.

Further objects, embodiments and elaborations of the method and the apparatus according to the invention will be apparent from the following description, in which the invention is further illustrated and elucidated on the basis of a number of exemplary embodiments, with reference to the drawings.

### BRIEF DESCRIPTION OF THE DRAWINGS

Fig. 1 shows a side view in cross section of an apparatus according to the invention;
Fig. 2 shows a view in perspective in cross section of a conduit of the apparatus of Fig. 1 in more detail;
Fig. 3 shows a view in axial direction of a conduit of the apparatus of Fig. 1
Fig. 4 shows a simplified side view in cross section of a conduit of the apparatus of Fig. 1 with the throttle body in the rest position; and
Fig. 5 shows a simplified side view in cross section of a conduit of the apparatus of Fig. 1 with the throttle body in the throttle position

### DETAILED DESCRIPTION OF THE INVENTION

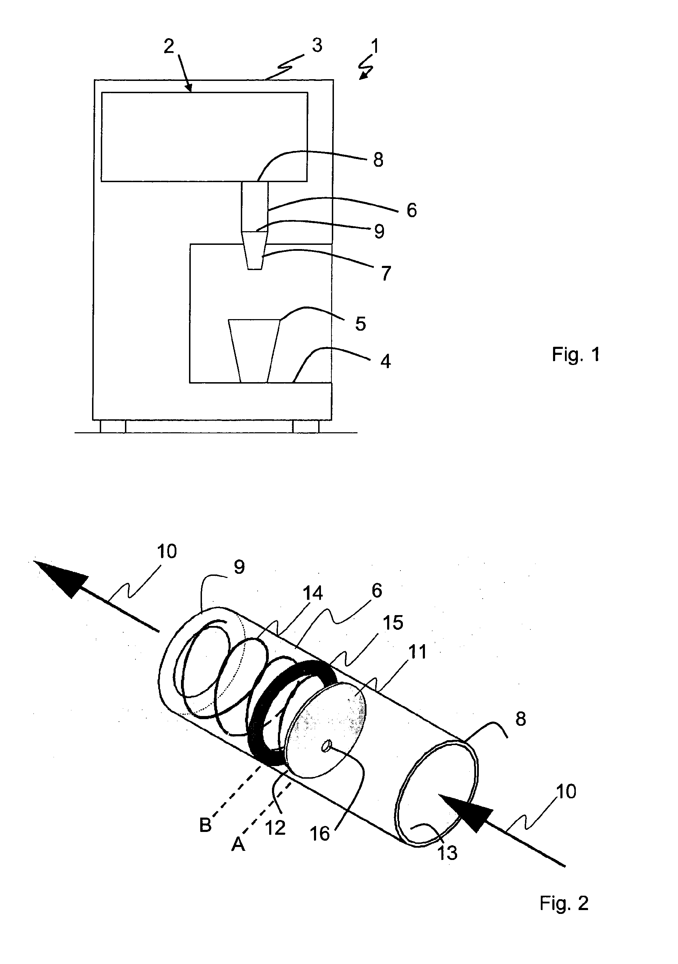

Figure 1 shows a side view in cross section of an apparatus 1 for preparing beverages, in particular beverages such as coffee, cappuccino, espresso, or chocolate milk, according to the invention.

The apparatus 1 comprises components 2 for preparing the beverage, an apparatus housing 3 for shielding the components, and a plateau 4 for supporting one or more cups 5. The parts for preparing the beverage are connected via a conduit 6 to a nozzle 7, which is mounted above the plateau 4.

The conduit 6 extends in an axial direction between an inlet 8 and an outlet 9, for transporting a fluid from the inlet 8 to the outlet 9 in a flow direction, the latter indicated with arrows 10 in Fig. 2. The conduit 6 defines a passage having a flow through area.

The apparatus 1 further comprises means for reducing the passage in the conduit 6 from a first flow through area to a second flow through area, which second flow through area is smaller than the first flow through area.

For preparing a beverage, for example after the mixing of starting elements, the intermediate beverage product is transported via the conduit 6 to the nozzle 7, for filling the cup 5 supported by the plateau 4.

Without whishing to be bound to any theory, it is believed that when an intermediate beverage product is transported from a reservoir or preparation chamber into and/or through a conduit, the bubbles present in the fluid will accumulate in the upstream part of the intermediate beverage product.

A method according to the invention of preparing a beverage having a cream top layer, in particular a beverage such as coffee or chocolate milk, comprises several steps.

First, an intermediate beverage product is prepared from beverage starting elements.

Furthermore, a conduit 6 is provided, the conduit extending in an axial direction between an inlet 8 and an outlet 9 for transporting the intermediate beverage product from the inlet to the outlet in a flow direction 10, the conduit defining a passage allowing the intermediate beverage product to pass.

Subsequently, the first part of the intermediate beverage product is transported via the conduit 6 and through the first flow though area in the flow direction 10. Then, the passage in the conduit 6 is reduced from the first flow through area to a second flow through area, which second flow through area is smaller than the first flow through area. The second part of the intermediate beverage product is transported via the conduit 6 and through the second flow through area in the flow direction 10. The second flow through area is of such a size and form that large bubbles are prevented from passing through the flow through area. The bubbles are broken down into smaller bubbles, therefore forming a creamy texture. Both the first and second part of the intermediate beverage product thus treated are combined to form the final beverage. Thus a beverage is created having a cream top layer.

In a preferred method, the provided conduit is made out of a flexible material, such as for example rubber. The first flow through area is defined by the passage, which can be reduced from a first flow through area to a second flow through area by clamping the conduit. This method provides a simple and easy way for providing a conduit for reducing the flow through area.

In an alternative method, the flow through area is reduced by moving a throttle body within the conduit from a rest position defining the first flow through area into a throttle position, defining the second flow through area. The use of a throttle body provides a simple and reliable manner of reducing the flow through area of the passage defined by the conduit.

In a further preferred method, the throttle body is moved into the throttle position under a force applied to the throttle body by the first part of the intermediate beverage product flowing via the conduit in the flow direction. Thus no extra drive or control system is needed for activating and/or operating the throttle body.

In the preferred embodiment shown in figs. 2-5, the means for reducing the passage comprise a throttle body 11. The throttle body 11 is moveable supported in the conduit 6 for movement in an axial direction of the conduit between the rest position and the throttle position downstream of the rest position.

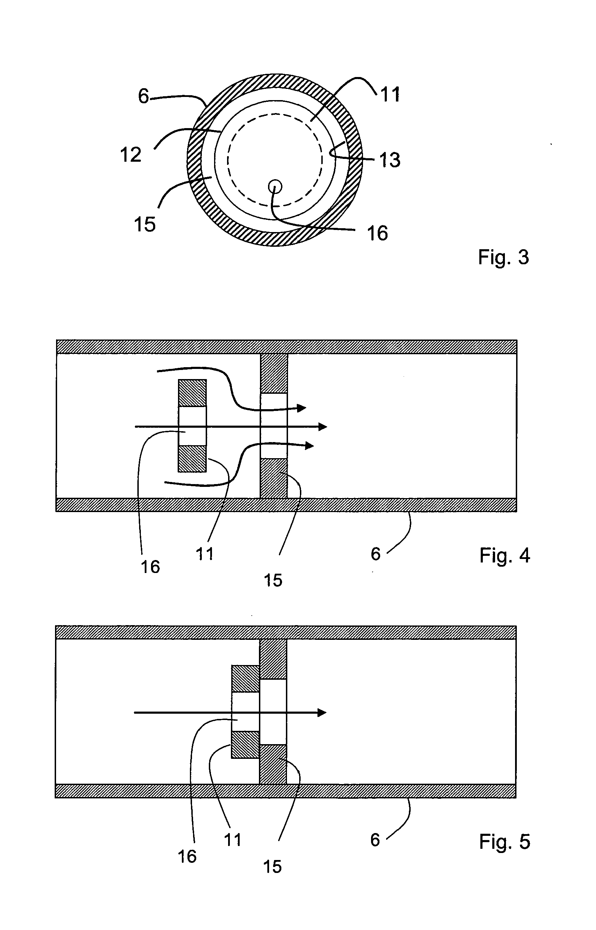

Figs. 2 and 4 show the throttle body 11 in its rest position, which is indicted with an "A". In the rest position the throttle body defines a passage in the conduit 6 having a first flow through area. The throttle body 11 extends in a direction perpendicular to the axial direction of the conduit 6 for blocking part of the conduit defining the first passage having a flow through area between the peripheral edge 12 of the throttle body and the inside surface 13 of the conduit.

In the throttle position, indicated with a "B" in Figs. 2 and 5, the throttle body 11 defines a passage in the conduit 6 having a second flow through area (smaller than the first one), in this particular embodiment the opening 16 in the throttle body 11.

In the embodiment shown, the conduit 6 further comprises a seat 15 for supporting the throttle body 11 when in the throttle position. The seat 15 extends along the inside surface 13 of the conduit 6 for supporting part of the peripheral edge 12 of the throttle body 11 such that the first passage between the peripheral edge of the throttle body and the inside surface of the conduit is substantially blocked when the throttle body is in the throttle position.

Fig. 3 depicts a view of the conduit 6 seen in the flow direction 10, upstream from the rest position A of the throttle body 11. The conduit 6 is shown in section and is therefore hatched. Concentrically positioned within the conduit the throttle body 11 is shown, including the opening 16. The seat 15 is partially obscured by the throttle body 11. The inner circumference of the seat 15 is indicated with a broken line since, when seen from this position, it is covered by the throttle body 11. The first flow through area is defined between the peripheral edge 12 of the throttle body 11 and the inner surface 13 of the conduit 6, when the throttle body 11 is in the rest position. In the embodiment shown, the opening 16 also is part of the flow through area.

As can clearly be seen in Fig. 3, the first flow through area is, at least substantially, blocked by the seat 15 when the throttle body 11 is in the throttle position B. Thus, when the throttle body 11 is in the rest position, the opening 16 forms the second flow through area.

When an intermediate beverage product is transported though the conduit, the first part of the beverage, comprising relatively little or no large bubbles, flows through the first passage. The intermediate beverage product is allowed to flow along the sides of the throttle body 11 as well as through an opening 16 in the throttle body, as shown in fig. 4. The first part of the intermediate beverage product can thus pass relatively quickly through the conduit via the flow through area of the first passage without for example the need of a substantial pressure difference.

The second part of the intermediate beverage product, comprising the accumulation of bubbles, is passed through the second, reduced flow through area.

The reduced flow through area prevents large bubbles from passing through the conduit and breaks larges bubbles into small bubbles. A fluid with small bubbles of substantially equal dimension, forming a layer of cream on the surface of the fluid, remains.

When the second part of the intermediate beverage product has passed through the conduit, the throttle body returns to the rest position by the force enacted upon it by the resilient body.

An apparatus 1 according to the invention can therefore provide a beverage with a cream layer consisting of small bubbles. Furthermore, the throttle body 11 is a simple device, which can be produced at low cost, and which does not need for example a monitoring system for operating.

Because the throttle position of the throttle body 11 is situated downstream of its rest position, the throttle body 11 moves along with the intermediate beverage product when moving from the rest position to the throttle position. Thus the throttle body can, in comparison with a throttle body having an upstream throttle position, relatively easy be moved into the throttle position since the throttle body does not need to overcome the forces exerted upon it by the flowing intermediate beverage product.

In the embodiment shown, the throttle body 11 is resiliently supported by a resilient body 14 e.g. a spring. The resilient body 14 at least exerts a force on the throttle body 11 in an upstream direction 10 when the throttle body is in a position downstream of the rest position, for moving the throttle body towards the rest position. Thus the throttle body is moveable supported in a simple and reliable manner. In an alternative embodiment, the throttle body may for example be mounted on a telescopic body such as a plunger-cylinder assembly which can be activated for moving the throttle body

In a preferred embodiment, the throttle body is supported such that that the throttle body 11 is moved towards the throttle position under the pressure of a liquid intermediate beverage product flowing through the conduit 6. While the throttle body 11 moves into the rest position the first part of the intermediate beverage product can flow through the first passage. For example, the resilient body 14 may be designed to provide a support force which is smaller than the force enacted by the flowing intermediate beverage product upon the throttle body 11. Thus the throttle body 11 is moved towards the throttle position by the intermediate beverage product flowing through the conduit, and no separate drive or control system is needed.

Preferably, only a small pressure difference is needed to move the throttle body 11 into the throttle position. In a preferred embodiment, the throttle body 11 is moved from the rest position to the throttle position when the pressure difference between the conduit 6 directly upstream of the throttle body 11 and the conduit 6 directly downstream of the body 11 is in the range of 0,9 bar to 0,2 bar, for example is 0,5 bar. Thus, when an intermediate beverage product is passed through the conduit 6, and no special provisions such as actuators, a drive, etc. are needed for operating the throttle body.

In an embodiment according to the invention the throttle body and/or the seat define a second passage having a flow through area that is smaller than the flow through area of the first passage, when the throttle body is in the throttle position. In the throttle position the throttle body 11 is supported by the seat 15. In the embodiment shown the seat 15 has the form of a ring shaped ridge or rib, extending from the inside surface 13 of the conduit. The seat 15 runs full circle along the inside surface 13 of the conduit 6 and supports the entire peripheral edge 12 of the throttle body 11, preventing beverage from passing along the sides of the throttle body. Thus, when the throttle body is in the throttle position, the flow through area of the conduit 6 is reduced to the opening 16 defined by the throttle body 11, forming the second passage. In the embodiment shown, the throttle body 11 defines one opening 16 for forming the second passage when the throttle body is in the throttle position. In a further embodiment, the throttle body may also comprise multiple openings.

In a further embodiment according to the invention, the throttle body and the seat cooperate to form at least one opening for forming the second passage when the throttle body is in the throttle position. The at least one opening can for example be formed by the seat supporting only sections of the throttle body, such that when the throttle body is in the throttle position, opening(s) remain between the throttle body and the seat or inside wall of the conduit, forming the second passage.

Alternatively, the seat may define at least one opening for forming the second passage when the throttle body is in the throttle position, possibly in addition to the at least one opening in the throttle body, or the throttle body and the seat may cooperate to form at least one opening for forming the second passage when the throttle body is in the throttle position, also in addition to at least one opening in the throttle body and/or at least one opening in the seat.

The conduit 6 shown in Fig. 1 is positioned vertically. However, it is noted that the conduit 6 may be positioned in any position, such as horizontal, vertical, diagonal, etc.

In the embodiment shown the throttle body 11 and the conduit 6 both have a circular cross section. The conduit 6 preferably has a diameter in the range of 6-12 millimetres, preferably is 10 millimetres. In an alternative embodiment for providing large volumes of beverage, for example suitable for filling jugs or thermos flasks, the diameter of the conduit may be larger.

In an alternative embodiment, the cross section of the conduit and or the throttle body may have any other shape, for example rectangular or triangular. For example a throttle body with a triangular cross section can be used in combination with a conduit having a rectangular cross section. In such a combination the first passage formed between the outer circumference of the throttle body and the inside circumference of the conduit is relatively large, and especially suited for an apparatus in which the fluid is transported under high pressure through the conduit.

In the embodiment shown the throttle body 11 is provided with one circular opening 16, forming the second passage. This opening preferably has a diameter in the range of 1,5-2,5 millimetres, preferably is 1,2 millimetres. In an alternative embodiment the throttle body may comprise multiple openings, and or the seat may be provided with multiple openings. By providing multiple openings, the time needed for the intermediate beverage product to pass the conduit is reduced. Furthermore, when an opening is blocked, for example by pieces of coffee granulate, the intermediate beverage product may still be passed via the other openings and the conduit is not blocked.

In the embodiment shown, a pressure means in the form of a pump is provided (not shown) for transporting the intermediate beverage product through the conduit 6 at a low pressure, for example the intermediate beverage product may enter the conduit 6 at an overpressure of 0,5 bar. Thus the intermediate beverage product enters the conduit 6 at an overpressure of 0,5 bar. Alternatively, the overpressure may also be caused by the preparation action itself, e.g. by a mixer mixing the intermediate beverage product, or by a combination of a pump and the preparation action. The pressure in the conduit is substantially lower than the pressure generated in the conventional apparatuses for producing a cream layer on a beverage which might amount up to 9 to 15 bar.

In an alternative embodiment, the conduit comprising the throttle body is mounted in vertical position and the intermediate beverage product is passed by using gravity. To prevent the throttle body from moving into the throttle position when a cleaning fluid is transported via the conduit, means for supporting the throttle body in the rest position may be provided. For example a moveable pin may be provided, the pin extending at least partially in the conduit in a blocking position for preventing the throttle body to move from the rest position when a cleaning fluid or the first part of an intermediate beverage product is transported under pressure via the conduit. For example a control unit may retract the pin, thus allowing the throttle body to move into the throttle position, when a first part of the intermediate beverage product has passed through the conduit.

In the preferred embodiment shown, the resilient body 14 is a spring, which is a low cost and reliable component. In an alternative embodiment the resilient body can for example also be a piston or a piece of resilient material for example rubber cylinder. Preferably, the resilient body also supports the throttle body in a direction angular to the axial direction of the conduit. In an alternative embodiment, the throttle body may be supported by a guiding system, for example formed by a linkage system, or may the peripheral edge comprise sections which extend in a radial direction for supporting the throttle body on the inside surface of the conduit.

In an alternative embodiment, the throttle body is hingeably connected to the conduit wall for hinging between the rest position in which the body is at a first angle with the flow direction and extending in the counter flow direction, and the throttle position in which the body is at a second angle with the axis of the conduit, and wherein the second angle is larger than the first angle. For example, the throttle body may have the form of a plastic strip or a lip of a rubber material of which the rubber functions as a hinge and as a resilient body. One end of the strip is attached to the wall of the conduit, and its opposite free end extends at an angle with the wall such that the strip extends mainly in, though at an angle with, the counter flow direction. Thus, the free end forming the throttle body or valve extends in and at an angle with the counter flow direction, the end of the lip positioned at a distance from the wall of the conduit. Thus, the end of the lip or strip is moved into the throttle position under the influence of an intermediate beverage product passing through the conduit. The resilient properties of the material force the valve back into the rest position when the intermediate beverage product has passed.

In an further alternative embodiment, the conduit may for example be made of a flexible material, such as for example a rubber tube, of which the flow through area may be reduced in a radial direction by compressing a section of the tube, e.g. by an external clamp. In such an embodiment no moving parts such as a throttle body are needed within the conduit. The flow through area reduction means are positioned outside the passage and therefore need not to be resistant against hot, fat etc fluids. Furthermore such a conduit is easy to clean since it comprises no complicated and/or moving parts. Such an embodiment may for example comprise a control unit and activating means for activating the clamp, and sensor means for detecting if the first part of the intermediate beverage product has passed the first passage, and signalling such to the control means.

In an embodiment according to the invention, the seat extends towards the centre of the conduit. The seat may extend along the entire inside circumference or along at least part of the inside circumference, for example at regular intervals, for supporting at least part of the peripheral edge of the throttle body.

Within the scope of the present invention, many embodiments other than those described above to illustrate the present invention are conceivable. For instance the distance between the rest position and the throttle position and/or the flexibility of the resilient body can be adjusted in relation to the type of beverage, the volume of the intermediate beverage product, the viscosity of the intermediate beverage product, etc. Thus the force and or time needed to move the throttle body into the throttle position can be adjusted to the type and volume of the intermediate beverage product. Also, the first and/or second flow through area may be rectangular shaped, oval shaped, etc when seen in the flow direction.

## Claims

1. Method for preparing a beverage having a cream top layer, in particular a beverage such as coffee or chocolate milk, comprising the steps of:
preparing an intermediate beverage product from beverage starting elements;
providing a conduit (6), the conduit extending in an axial direction between an inlet (8) and an outlet (9) for transporting the intermediate beverage product from the inlet to the outlet in a flow direction (10), the conduit defining a passage allowing the intermediate beverage product to pass;
transporting a first part of the intermediate beverage product via the conduit (6) and through a first flow though area in the flow direction (10);
reducing the passage in the conduit from the first flow through area to a second flow through area, which second flow through area is smaller than the first flow through area;
transporting a second part of the intermediate beverage product via the conduit (6) and through the second flow through area in the flow direction; and
combining the first and second part thus treated for creating a beverage having a cream top layer.

2. Method according to claim 1, wherein the conduit is made out of a flexible material, for example rubber, and the passage in the conduit is reduced from the first flow through area to the second flow through area by clamping the conduit.

3. Method according to claim 1, wherein the flow through area is reduced by moving a throttle body within the conduit from a rest position defining the first flow through area into a throttle position, defining the second flow through area.

4. Method according to claim 3, wherein the throttle body is moved into the throttle position under a force applied to the throttle body by the first part of the intermediate beverage product flowing via the conduit in the flow direction.

5. Apparatus for preparing a beverage having a cream top layer, in particular a beverage such as coffee or chocolate milk, comprising:
a conduit (6), extending in an axial direction between an inlet (8) and an outlet (9) for transporting a fluid from the inlet to the outlet in a flow direction (10), said conduit defining a passage allowing the intermediate beverage product to pass; and
means for reducing the passage in the conduit (6) from the first flow through area to the second flow through area, which second flow through area is smaller than the first flow through area.

6. Apparatus according to claim 5, wherein the means for reducing the passage comprise a throttle body (11), moveable supported for movement between a rest position in which the throttle body defines a passage in the conduit (6) having the first flow through area, and a throttle position in which the throttle body (11) defines a passage in the conduit (6) having the second flow through area,

7. Apparatus according to claim 6, wherein the throttle body (11) is moveable supported within the conduit (6) for movement between the rest position and the throttle position, which throttle position is situated downstream of the rest position.

8. Apparatus according to claim 7, comprising a resilient body (14), preferably a spring, for resiliently supporting the throttle body (11), at least exerting a force on the throttle body (11) for moving it towards the rest position when said throttle body (11) is in a position downstream of the rest position.

9. Apparatus according to claim 8, wherein the resilient body is designed such that the throttle body (11) is moved towards the throttle position under the pressure of an intermediate beverage product flowing through the conduit (6).

10. Apparatus according to one of the claims 5-9, wherein the throttle body (11) comprises at least one opening (16) for defining at least part of the second flow through area.

11. Apparatus according to one of the claims 5-10, wherein the throttle body (11) has a circular cross section.

12. Apparatus according to one of the claims 5-11, wherein the conduit (6) has a circular cross section.

13. Apparatus according to one of the claims 6-12, wherein the conduit comprises a seat (15) for supporting the throttle body (11) when in the throttle position, which seat (15) extends along at least part of the inside surface (13) of the conduit (6) for supporting at least part of the peripheral edge (12) of the throttle body (11).

14. Apparatus according to claim 13, wherein the throttle body (11) is moveable supported in the conduit (6) for movement in an axial direction of the conduit between the rest position and the throttle position downstream of the rest position, and the throttle body (11) extends in a direction perpendicular to the axial direction of the conduit (6) for blocking part of the conduit (6) and wherein the throttle body, when in the rest position, defines a passage between the peripheral edge (12) of the throttle body (11) and the inside surface (13) of the conduit (6), the passage having the first flow through area; and the throttle body (11), when supported by the seat (15) in the throttle position, defines a passage having the second flow through area which is smaller than the first flow through area.

15. Apparatus according to one of the claims 5-14, wherein the throttle body is hingeably connected to the conduit wall for hinging between the rest position in which the body is at a first angle with the axis of the conduit, and the throttle position in which the body is at a second angle with the axis of the conduit, and wherein the second angle is larger than the first angle.

16. Apparatus according to claim 5, wherein the conduit is made of a flexible material, for example rubber, and the means for reducing the passage in the conduit comprise external clamping means designed in such a way as to exert a force to the external periphery of the conduit for reducing the passage.
